(19) Europäisches Patentamt / European Patent Office / Office européen des brevets

(11) **EP 3 708 309 A1**

(12) **EUROPEAN PATENT APPLICATION**

(43) Date of publication:
**16.09.2020 Bulletin 2020/38**

(51) Int Cl.:
**B25J 9/16** (2006.01)

(21) Application number: **20162255.2**

(22) Date of filing: **10.03.2020**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**KH MA MD TN**<br><br>(30) Priority: **11.03.2019 GB 201903289**<br><br>(71) Applicant: **Arrival Limited**<br>**London W14 8TS (GB)** | (72) Inventors:<br>• **KONSTANTIN, Svitkov**<br>**London, W14 8TS (GB)**<br>• **RYBNIKOV, Alexander**<br>**London, W14 8TS (GB)**<br><br>(74) Representative: **Korenberg, Alexander Tal et al**<br>**Kilburn & Strode LLP**<br>**Lacon London**<br>**84 Theobalds Road**<br>**London WC1X 8NL (GB)** |

(54) **A METHOD FOR DETERMINING POSITIONAL ERROR WITHIN A ROBOTIC CELL ENVIRONMENT**

(57) A method for determining positional errors within a robotic cell environment, the method comprising the steps of: a). Obtaining one or more pre-determined real values of the positioning and/or orientation of a visual identifier located within the robotic cell environment; b). Acquiring an image of the robotic cell environment using a camera located at a first position and/or orientation within the robotic cell environment; c). Calculating one or more values of the positioning and/or orientation of the visual identifier using the acquired image; d). Comparing the real value of the positioning and/or orientation of the visual identifier within the robotic cell environment with the calculated value of the positioning and/or orientation of the visual identifier within the robotic cell environment; e). Determining an error value comprising the difference between the real and calculated values; f). Repeating steps a) to e) for a plurality of other visual identifiers located within the robotic cell environment; and g). Estimating a maximum potential error value for the calculated value of at least one of the visual identifiers of the plurality of visual identifiers based on at least the error values determined for the plurality of visual identifiers.

Fig. 1

EP 3 708 309 A1

**Description**

**FIELD OF THE INVENTION**

This invention relates to a method and a system for determining positional error within a robotic cell environment, in particular the vision system implemented in the robotic cell environment.

**BACKGROUND TO THE INVENTION**

Semi-Automated production lines are a common element of modern manufacturing, employing a plurality of robotic cells to increase throughput and accuracy of the manufacturing line. These automated production lines are typically overseen and managed by a number of manual operators who engage with the production line at pre-defined stages or in instances where there is an error incurred by one or more of the robots within the robotic cell. The robotic assemblies in these production lines are configured to interact with a plurality of objects on the line and perform a number of pre-defined actions in relation to the objects, the pre-defined actions being determined by the particular scenarios occurring during a particular manufacturing process.

As production lines move towards increasing automation with the goal of achieving fully automated production lines, bringing process quality improvements, in particular in terms of throughput and efficiency with reduced human input, there is a need to provide automated arrangements including robotic assemblies which are more flexible in their operation i.e. where the robotic assemblies take into account variability of the processes in which they are implemented and the according variability in objects with which they may interact. For example this concept of flexible manufacturing supposes automated treatment of general scenario violations such as: temporary objects on the operational paths; failure of operated objects; robot maintenance; added operations; new objections appearing in scenarios; new routes or operations being identified for the robot to perform; and, in instances where a robot is non-functioning, the operations being taken over by one or more other robots such that impact on the manufacturing process is kept to a minimum.

A key element of the robotic assemblies mentioned above is that the movement, trajectories and correctness of the robot operations must be tightly controlled at all stages during the manufacturing process, as even small errors in positioning or trajectory can lead to scenario violations occurring such as those mentioned previously. To control the operations of the robotic assemblies mentioned, a computer vision system including one or more cameras is used to track and instruct the movement of the robotic assemblies and further, typically, the movement of objects within the manufacturing process which the robotic assemblies implement. These computer vision systems typically operate by tracking the movement of the robots and objects interacting therewith using one or more visual identifiers. These visual identifiers may comprise one or more markers or the like which are positioned upon the robot, typically at various places thereof, or additionally or alternatively comprise visible features on the robots, objects or other elements of the robotic cell. As object positional errors are the most common problem in robotic systems the computer vision system must be able to accurately and reliably identify the visual identifiers within the robot cell environment to keep these errors to a minimum, as error accumulation can lead to significant scenario violations and downtime of the robotic cells.

To obtain more accurate results, it is necessary to optimize the position of the camera and visual identifiers, typically comprising markers, so that the resulting positional errors decrease. In many cases better surveillance of the visual identifiers could be obtained when several cameras are used to observe the same object from different positions. This leads into one of the problems for manufacturing: planning what type of cameras, how many and where should be they installed to get the computer vision system optimal by performance, cost and result. On the other hand, the observed environment itself and observed objects there within may be subject to change. Informed recommendations for ideal locations for various elements within the environment (robots, parts, tooling, chargers) and dimensions (walls, ceiling, windows, paths) should be obtained.

In many cases, the available cameras, which are used within the robot cell environment, are not precise enough to detect small objects or details of the objects. The most straightforward solution to this problem which might be considered may be the use of higher resolution cameras, however this may not be the most appropriate solution as this has a number of deficiencies. For example this approach brings with it increased costs, is more processor intensive, increases the network load corresponding to the bit rate of the images and uses image processing algorithms and analytics that will incur slowdowns on the server.

Therefore there exists a need to provide a method for increasing the accuracy of available cameras in determining the position of visual identifiers within the robotic cell environment. It is a desire of the present invention to provide a method which overcomes the deficiencies identified above.

**SUMMARY OF THE INVENTION**

A first aspect of the invention comprises a method for determining positional errors within a robotic cell environment, the method comprising the steps of: a). Obtaining one or more pre-determined real values of the positioning and/or orientation of a visual identifier located within the robotic cell environment; b). Acquiring an image of the robotic cell environment using a camera located at a first position and/or orientation within the robotic cell environment; c). Calculating one or more values of the positioning and/or orientation of the visual identifier using the acquired image; d). Comparing the real value of the positioning and/or orientation of the visual identifier within the robotic cell environment with the calculated value of the positioning and/or orientation of the visual identifier within the robotic cell environment; e). Determining an error value comprising the difference between the real and calculated values; f). Repeating steps a) to e) for a plurality of other visual identifiers located within the robotic cell environment; and g). Estimating a maximum potential error value for the calculated value of at least one of the visual identifiers of the plurality of visual identifiers based on at least the error values obtained for the plurality of visual identifiers. Advantageously the invention allows for optimal configuration planning of the robotic cell environment from the computer vision standpoint, improves the overall accuracy and reliability of the computer vision system and provides for real-time updates of the cameras' positioning within the robot cell environment.

Ideally, the method further comprises determining an error distribution for the camera when located at the first position and/or orientation based on the error values obtained for the plurality of visual identifiers and using the error distribution to estimate the maximum potential error value for one or more of the visual identifiers.

Preferably, the method further comprises repeating steps a). to g.) when the camera is located at least at a second position and/or orientation within the robotic cell environment.

Ideally, the distance from the camera to one or more visual identifiers when the camera is at the first position is greater than or less than the distance from the camera to the one or more visual identifiers when the camera is at the second position.

Preferably, the visual identifiers correspond to one or more parts of a robot located within the robot cell environment.

Ideally, the visual identifiers comprise one or more markers. Preferably, the markers comprise ArUco markers.

Ideally, the visual identifiers comprise the shape of the one or more parts of the robot.

Preferably, the real and/or calculated values of the positioning and/or orientation of the visual identifiers comprise co-ordinate data along an x, y and z axis.

Ideally, the error distribution comprises a normal distribution of the error values.

Preferably, the method further comprises generating data indicating the best and/or worst positions for the camera based on at least the estimated maximum potential error value for the calculated value of at least one of the visual identifiers of the plurality of visual identifiers.

A second aspect of the invention is recited in claim 12. The second aspect provides a robot cell system comprising: one or more robots; a displacement arrangement for carrying one or more objects relative to the robots; a plurality of visual identifiers; at least one camera; a controller communicatively coupled to at least the one or more robots and the at least one camera; wherein the controller is configured to transmit instructions to the one or more robots which cause the robots to interact with the objects carried on the conveyor in accordance with one or more pre-defined actions; wherein the controller is configured to carry out the method for determining positional errors within a robotic cell environment as claimed in any preceding statement of invention.

Ideally, the controller is configured to adjust the position and/or orientation of the camera in real-time based on the estimated maximum potential error value for the calculated value of at least one of the visual identifiers of the plurality of visual identifiers.

Preferably, the pre-defined actions correspond to the movement and/or orientation of the robots relative to the one or more objects and wherein said pre-defined actions are pre-installed on the controller.

Ideally the system comprises a plurality of cameras.

Preferably, where the visual identifiers comprise the shape of the one or more parts of the robot, the controller has pre-installed thereon one or more programs comprising an algorithm which is operable to recognise the shape of one or more visible features of the robot.

## BRIEF DESCRIPTION OF THE DRAWINGS

The invention will now be described by way of example with reference to the accompanying drawings, in which:

Figure 1 illustrates an embodiment of a typical robot cell;
Figure 2 illustrates an embodiment of a visual identifier;
Figure 3 illustrates a coordinate system with a robotic arm shown there within;
Figure 4 illustrates a camera sensor coordinate system;
Figure 5 illustrates a positional error between calculated and real positions of the visual identifier relative to a pixel of a camera sensor;

Figure 6 illustrates the positional error based upon the orientation of the visual identifier relative to the camera;
Figure 7 illustrates the positional error distribution based on fractions of a single pixel of the camera sensor;
Figure 8 illustrates the integral positional error distribution based on fractions of a single pixel of the camera sensor;
Figure 9 illustrates a representation of the robot cell environment;
Figure 10A illustrates the distribution of the positional error based on the camera adopting a plurality of positions within a virtual representation of the robot cell environment; and
Figure 10B illustrates how accurately each marker is seen from one position of the camera.

**DETAILED DESCRIPTION OF THE DRAWINGS**

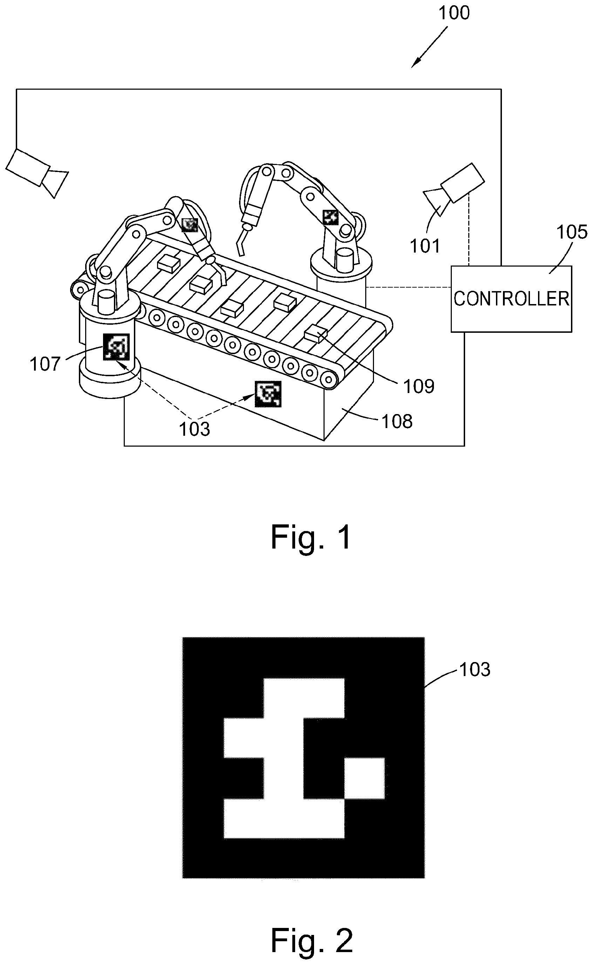

The present invention is directed towards a method and a system for determining positional error within a robotic cell environment. Referring now to Figure 1 there is shown, generally indicated by the reference numeral 100, an embodiment of a robotic cell. In this example, an assembly line robot cell is illustrated which includes two robots 107, typically comprising robot arms, which have a plurality of rotational joints 111 and which are operable to rotate about their bases, typically along an axis which is substantially perpendicular to the ground surface upon which they rest in-use. It should be understood that the robot cell 100 is not limited to two robots 107 and preferably comprises a plurality of robots 107. The robots 107 interact with objects 109 carried on a conveyor belt 108, however the objects 109 may be carried on any suitable apparatus which is configured to position the objects 109 relative to one or more of the robots 107. The robot cell 100 further comprises one or more cameras 101 or any other suitable image capture device which are arranged to monitor the positioning and trajectory of the robots 107 and/or the objects 109. To this end the one or more cameras 101 are communicatively connected via wired and/or wireless transmission means to a controller 105 which is configured to receive images obtained from the cameras 101. The controller 105 is further coupled to the robots 107 and typically also to the conveyor belt 108 and optionally to the one or more objects 109. The controller 105 is configured to transmit instructions to the plurality of robots 107 based upon one or more characteristics of the received images, wherein the instructions may comprise instructions regarding the positioning and/or trajectory of one or more parts of the robot 107 which the robot 107 should alter and/or adopt. The controller 105 is configured to recognise one more visual identifiers 103 within the image obtained from the one or more cameras 101. The visual identifiers 103 may comprise one or more markers or the like which are positioned upon the robot 107 (as is shown in Figure 1), typically at various places thereof, or additionally or alternatively comprise visible features on the robots 107, objects 109 or other elements of the robotic cell environment or any combination thereof. The controller 105 comprises a computing device that is configured to execute one or more software programs for the operation of the one or more robots 107 during the manufacturing process. The robotic cell environment may be a physical robotic cell or a simulated robotic cell environment i.e. comprising a generated model which accurately reflects a real robotic cell environment.

In the embodiment illustrated in Figure 1, the visual identifiers 103 comprise a plurality of markers which are applied to one or more points on the robots 107 and can optionally be further applied to the conveyor belt assembly 108 and/or objects 109. The markers typically comprise ArUco markers which can be used for determining the locations and orientations of the one or more parts of the robots 107 using the images obtained from the cameras 101. ArUco markers are small 2D barcodes. Each ArUco marker corresponds to an identifier which can be encoded into a small grid of black and white pixels. The ArUco marker can be detected by the cameras and transmitted to the robot controller 105 which includes processing means for processing software such as pre-installed applications and applying the software to the images received from the cameras 101. For example the controller 105 may have installed thereon an ArUco decoding algorithm which is configured to locate, decode, and/or estimate the location and orientation of any ArUco markers in the field of view of the cameras 101.

Referring now to Figure 2, there is shown an embodiment of a visual identifier 103. The visual identifier 103 comprises a marker which can be attached or otherwise mounted on or coupled to one or more objects within the robot cell environment, in particular (as shown in Figure 1) preferably upon one or more parts of the robot arm 107. The marker in this instance comprises an ArUco marker which is a synthetic square marker composed by a wide black border and an inner binary matrix which determines its identifier. The black border facilitates its fast detection in the image and the binary codification allows its identification and the application of error detection and correction techniques. The marker size determines the size of the internal matrix. For instance, a marker size of 4x4 is composed by 16 bits. When the markers are photographed, the resulting image can include ArUco markers and the marker detection process, carried out upon the controller 105, provides a list of detected markers within the camera image. Each detected marker can include the positions of the four corners in the marker and the identification of the marker.

The marker detection process can include two main steps. 1) Detection of marker candidates. In this step the image is analyzed, by the controller 105, in order to find square shapes that are candidates to be markers. The analysis can begin with an adaptive thresholding to segment the markers, then contours are extracted from the threshold images and those that are not convex or not approximate to a square shape are discarded. 2) After the candidate marker detection, the controller 105 can determine if the candidate markers are actually markers by analyzing their inner codification. The marker bits of each marker are extracted by perspective transformation applied to obtain the marker in its canonical form. Then, the canonical image can be processed by the controller 105 to separate white and black bits. The marker image can be divided in different cells according to the marker size and the border size and the amount of black or white pixels on each cell is counted to determine if it is a white or a black bit.

In other embodiments (not shown), the location and orientation of the robots 101 and/or the parts thereof, the objects 109 and the conveyor belt 108 can be determined without using markers and instead using advanced computer vision algorithm implementations stored upon the controller 105. In these embodiments, the cameras 101 can use the visible features on the robots 107, the objects 109 and/or the conveyor belt 108, instead of markers, as visual identifiers 103. To this end the controller 105 is typically preprogrammed with algorithms configured to recognise the shape or other visually recognizable features of the robots 101 and/or the parts thereof, the objects 109 and the conveyor belt 108. In one embodiment, the cameras 101 and associated controller 105 can apply a photogrammetry process which can convert the photographs from the cameras 101 into 3D models of the robots 107, the objects 109 and the conveyor belt 108.

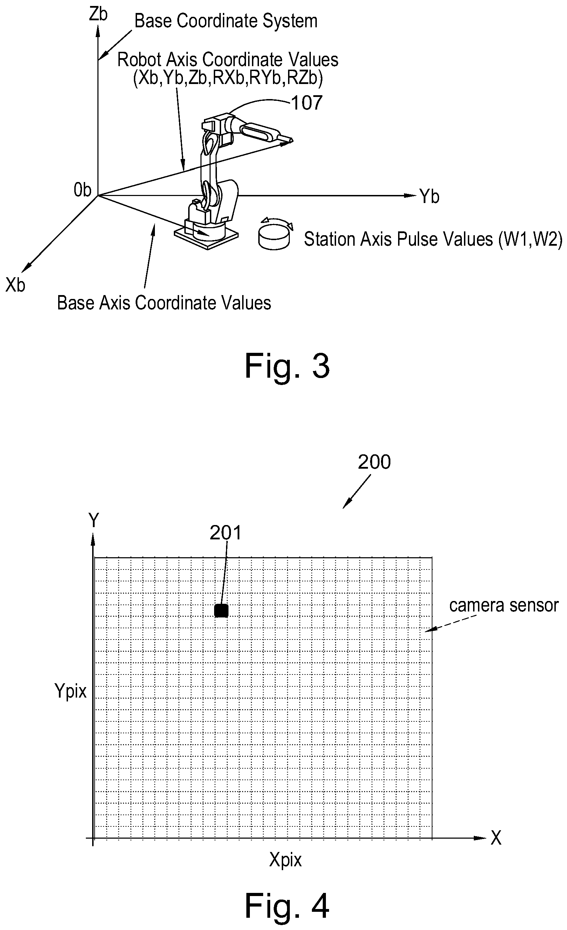

Figure 3 illustrates a coordinate system with the robot arm 107 illustrated therein. The coordinate system has an X-axis, a Y-axis and a Z-axis and reference points in the robot cell 100 can have position measurements X, Y, and Z as well as rotational positions RX, RY, and RZ which can describe the rotational orientations about the X, Y and Z axis. In this case, the position of the tip of the robot arm is identified based upon X, Y, and Z coordinates and the orientation is identified based upon RX, RY, and RZ. All positions of the robots 107 and the objects 109 in each robot cell 100 can be defined with reference to the coordinate system. These measurements can be relative to a "Base Coordinate System" (sometimes referred to as World Coordinate System) which defines a common reference point which can be X = 0, Y = 0, and Z = 0 for a robot cell 100. This base coordinate system can be useful when multiple robots 107 and objects 109 are in the same robot cell 100 as positions defined in Base Coordinates will be the same for all robots 107. In order for the robot cell 100 to be functional, static relations between robot(s) 107 and objects 109 in the robot cell 100 must be precisely calibrated before running the robots 107 to process the objects 109. The static relations may also be updated on the fly during processing since manufacturing process cell setups can change due to a change in production or physical changes of the environment. Calibration techniques are able to calibrate the manipulator geometric model using different modeling, measurement and identification methods. The identified errors can be efficiently compensated for either by adjusting the controller inputs which can be the target points and/or by direct modification of the model parameters used in the controller 105.

The sensors 200 of the cameras 101, typically comprising digital cameras, comprise a set of individual photosensitive elements commonly known as pixels, each such element forms one point in the image as illustrated in Figure 4. The higher the resolution of the camera sensor 200, the higher the detail of the resulting image it can capture. The number of pixels on a matrix is called the matrix resolution and is measured in megapixels (millions of pixels). Each such pixel perceives light and converts it into an electric charge (the brighter the light, the stronger the charge). The precision of the object being captured relative to the plurality of individual pixels depends on the resolution of the camera sensor 200. A shorter working distance allows the camera sensor 200 to capture more details of the object. The same detailed vision of the object on cameras 101 with a larger working distance can be obtained using a lens with larger focal distance or/and using a camera sensor with a larger resolution. An example of a camera sensor coordinate system is shown in Figure 4. Each pixel has its own position, described by the point (Xpix, Ypix).

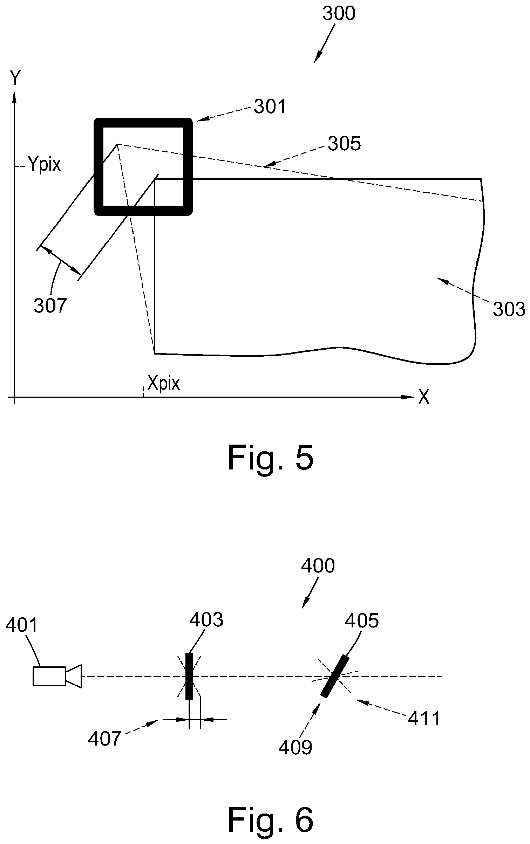

As mentioned previously a problem arises where the resolution of the camera sensor 200 is not precise enough to detect small objects or details of the object. For example, referring now to Figure 5 there is shown a section of the image captured by the camera, of a visual identifier 303 within the robot cell environment 100. The visual identifier 303 comprises an ArUco marker of the type described previously. The ArUco marker is typically substantially square in shape having four corners, the corner such as that shown in Figure 5 is one of four outer corners, which are formed by the black outer frame of the marker. In the following, the outer corners of the marker are used however, for better accuracy; a larger number of points on the marker such as internal corners which form internal black cells of the marker could also be used.

There are known algorithms, which allow the controller 105 to calculate a virtual position of the location and/or orientation of these markers, preferably in 3D. For example a scene view is formed by projecting 3D points into the image plane using a perspective transformation.

$$s\,m' = A[R|t]M'$$

or,

$$s \begin{bmatrix} u \\ v \\ 1 \end{bmatrix} = \begin{bmatrix} f_x & 0 & c_x \\ 0 & f_y & c_y \\ 0 & 0 & 1 \end{bmatrix} \begin{bmatrix} r_{11} & r_{12} & r_{13} & t_1 \\ r_{21} & r_{22} & r_{23} & t_2 \\ r_{31} & r_{32} & r_{33} & t_3 \end{bmatrix} \begin{bmatrix} X \\ Y \\ Z \\ 1 \end{bmatrix}$$

where:

(X, Y, Z) are the coordinates of a 3D point in the world coordinate space
(u, v) are the coordinates of the projection point in pixels
A is a camera matrix, or a matrix of intrinsic parameters
(cx, cy) is a principal point that is usually at the image center
fx, fy are the focal lengths expressed in pixel units.

Thus, if an image from the camera is scaled by a factor, all of these parameters should be scaled (multiplied/divided, respectively) by the same factor. The matrix of intrinsic parameters does not depend on the scene viewed. So, once estimated, it can be re-used as long as the focal length is fixed (in case of zoom lens). The joint rotation-translation matrix [R|t] is called a matrix of extrinsic parameters. It is used to describe the camera motion around a static scene, or vice versa, rigid motion of an object in front of a still camera. That is, [R|t] translates coordinates of a point (X, Y, Z) to a coordinate system fixed with respect to the camera. The transformation above is equivalent to the following (when z does not equal 0):

$$\begin{bmatrix} x \\ y \\ z \end{bmatrix} = R \begin{bmatrix} X \\ Y \\ Z \end{bmatrix} + t$$

$$x' = x/z$$

$$y' = y/z$$

$$u = f_x * x' + c_x$$

$$v = f_y * y' + c_y$$

Real lenses usually have some distortion, mostly radial distortion and slight tangential distortion. So, the above model is extended as:

$$\begin{bmatrix} x \\ y \\ z \end{bmatrix} = R \begin{bmatrix} X \\ Y \\ Z \end{bmatrix} + t$$

$$x' = x/z$$

$$y' = y/z$$

$$x'' = x' \frac{1 + k_1 r^2 + k_2 r^4 + k_3 r^6}{1 + k_4 r^2 + k_5 r^4 + k_6 r^6} + 2p_1 x' y' + p_2 (r^2 + 2x'^2)$$

$$y'' = y' \frac{1 + k_1 r^2 + k_2 r^4 + k_3 r^6}{1 + k_4 r^2 + k_5 r^4 + k_6 r^6} + p_1 (r^2 + 2y'^2) + 2p_2 x' y'$$

where

$$r^2 = x'^2 + y'^2$$

$$u = f_x * x'' + c_x$$

$$v = f_y * y'' + c_y$$

$k_1$, $k_2$, $k_3$, $k_4$, $k_5$, and $k_6$ are radial distortion coefficients. $P_1$ and $P_2$ are tangential distortion coefficients. In the functions below the coefficients are passed or returned as vector:

$(k_1, k_2, p_1, p_2[,k_3[, k_4, k_5, k_6]])$

That is, if the vector contains four elements, it means that $k_3 = 0$. The distortion coefficients do not depend on the scene viewed. Thus, they also belong to the intrinsic camera parameters and they remain the same regardless of the captured image resolution. If, for example, a camera has been calibrated on images of 320 x 240 resolution, absolutely the same distortion coefficients can be used for 640 x 480 images from the same camera while $f_x$, $f_y$, $c_x$, and $c_y$ need to be scaled appropriately.

In figure 5 the pixel of the camera sensor 301 is shown as a square; every point of space, which falls into this square, might trigger or light the pixel 301. The common problem with existing algorithms, such as those mentioned above, is that the single pixel of the camera sensor 301 may correspond to many points in real space and if we only have coordinates of the marker, in this case the marker corner, calculated using the algorithm based on the image obtained from the camera sensor 301 (Xpix, Ypix) or an image of the simulated robotic cell environment, it is difficult to determine where within the actual pixel 301 the corner of the marker is located. For example, the position of the marker corner as calculated using the algorithms mentioned above is indicated at 305, when compared with the real position of the marker corner indicated at 303 it can be seen that there is a significant difference between the real position and the calculated position as indicated by the error shown at 307. As the robot arms 107 are required to interact with and manipulate the objects 109 as they pass thereby on the conveyor belt 108 or the like, which in some instances may require very precise and delicate movements, it is essential that the error between the real position of the marker and the calculated position is known and/or reduced as much as possible.

The maximal allowable error of the object positioning, i.e. the error between the real and calculated values of the visual identifiers within the robot cell environment, is determined based upon the particular requirements of the manufacturing process within which the robot cell 100 is to be implemented and the dimensions of the objects 109 which the robots 107 will be required to interact with and manipulate. For example, during a manufacturing process where the robot is required to perform an operation requiring the insertion of a cylindrical object within a corresponding substantially cylindrical space, the space having a diameter of about 100 millimetres, the allowable misplacement of the robot arm is 3 millimetres off of the vertical axis of the cylindrical space.

Advantageously the present invention allows the use of cameras of lower resolutions for the detection of sub-pixel elements of the visual identifier and provides for the accurate estimation of the possible error between the real and calculated positions of the visual identifiers and the probability of the error. It should be understood that where the term *"coordinates in 3D space"* is used it is intended to mean that the position of the described point is relative to a selected coordinates origin (X, Y, Z) axis. Selection of the coordinate system and the measurement units are implementation dependent. The units for example may be millimetres or centimetres or any appropriate standard unit of measurement.

An embodiment of the invention provides a method for determining positional errors within a robotic cell environment 100, the method comprising the steps of:

a). Obtaining one or more pre-determined real values of the positioning and/or orientation of a visual identifier located within the robotic cell environment;

b). Acquiring an image of the robotic cell environment using a camera located at a first position within the robotic cell environment;

c). Calculating one or more values of the positioning and/or orientation of the visual identifier using the acquired image;

d). Comparing the real value of the positioning and/or orientation of the visual identifier within the robotic cell environment with the calculated value of the positioning and/or orientation of the visual identifier within the robotic cell environment;

e). Determining an error value comprising the difference between the real and calculated values;

f). Repeating steps a) to e) for a plurality of other visual identifiers located within the robotic cell environment; and

g). Estimating a maximum potential error value for the calculated value of at least one of the visual identifiers of the plurality of visual identifiers based on at least the error values obtained for the plurality of visual identifiers.

Preferably, step a). obtaining one or more pre-determined real values of the positioning and/or orientation of a visual identifier 103 located within the robotic cell environment may comprise obtaining real measurements from a physical robotic cell environment. However, alternatively, the pre-determined real values could be obtained from a simulated model representing a physical robotic cell environment or further alternatively the pre-determined real values could be obtained from design data or any other suitable source of accurate values of positioning and/or orientation of a robotic cell environment. In a preferred embodiment a simulated or virtual model of a robotic cell environment is generated and the position of one or more robots 107 and the position of one or more visual identifiers 103 are specified within the model, i.e. the position and/or orientation of the visual identifiers 103 typically relative to the one or more robots 107 and/or one or more cameras therein. It should be understood that the generated model comprises virtual representations of the robotic cell environments and the plurality of features thereof e.g. robots 107, visual identifiers 103, cameras 101, objects 109 and/or conveyor belt 108, which can therefore be referred to as "virtual features". As the model is generated based on user requirements, and particularly user parameters, the exact co-ordinate location in terms of position and/or orientation of the virtual features within the simulated robotic cell environment, in particular the visual identifiers 103, is accurately known and is therefore well suited for implementing the method of the invention described herein. It should be understood in the foregoing that the term "real value" is intended to mean values which are accurately known.

Accordingly as mentioned above, where the step a). comprises obtaining real values from a simulated model representing the robotic cell environment, step b.) may comprise acquiring an image of the robotic cell environment comprising a simulated robotic cell environment using a virtual camera located at least at a first position within the simulated robotic cell environment. For example, where a simulated model is used the method may comprise the steps of:

a). Obtaining one or more pre-determined real values of the positioning and/or orientation of a visual identifier located within a simulated robotic cell environment;

b). Acquiring an image of the simulated robotic cell environment using a virtual or simulated camera located at a first position within the simulated robotic cell environment;

c). Calculating one or more values of the positioning and/or orientation of the visual identifier within the simulated robotic cell environment using the acquired image;

d). Comparing the real value of the positioning and/or orientation of the visual identifier within the simulated robotic cell environment with the calculated value of the positioning and/or orientation of the visual identifier within the simulated robotic cell environment;

e). Determining an error value comprising the difference between the real and calculated values;

f). Repeating steps a) to e) for a plurality of other visual identifiers located within the simulated robotic cell environment; and

g). Estimating a maximum potential error value for the calculated value of at least one of the visual identifiers of the plurality of visual identifiers based on at least the error values obtained for the plurality of visual identifiers;

Optionally, h). applying the maximum potential error value to a physical robotic cell environment.

In relation to the methods described previously, preferably the step of g). estimating a maximum potential error value for the calculated value of at least one of the visual identifiers of the plurality of visual identifiers based on the error values obtained for the plurality of visual identifiers, further comprises the step of determining an error distribution for the camera when located at the first position based on the differences between the real and calculated values for the plurality of visual identifiers and using the error distribution to estimate the maximum potential error value.

For the above method it is assumed that the internal parameters of the camera are pre-determined. Further, as mentioned, the number and real positions (i.e. 3D co-ordinates) of each of the visual identifiers is known prior to calculating the calculated values. For example in one implementation of the above method where the visual identifiers comprise a plurality of ArUco markers, the number of markers depending on the intended implementation, however it should be understood that the eventual results should be repeatable. In the current implementation 200 pictures are used, the sizes of markers are known (80x80 millimetres). Further, the positions of the markers in 3D space are pre-defined: coordinates and orientation of each marker are set (known) before picturing. Such images could be obtained using synthetic simulations or captured by the real camera. The coordinates in 3D of each considered marker's corners are known (Xreal, Yreal, Zreal). In this implementation the method may comprise:

Finding and selecting a marker on the image acquired by the camera using the known algorithm. This typically includes finding the corners of the marker; (*NOTE: the known algorithm for finding and selecting the marker on the picture detects points on the image that lie on the side shapes of the marker. The coordinates of these points are represented by an integer number of pixels. Further, on the found points, the coefficients of a straight line are calculated, such that the segment which forms the side shape can be found. Subsequently, the algorithm looks for the position of the corners of the marker as being the intersection of the corresponding lines of the sides. At this stage one or more of corners could be located within a fractional part of the camera pixel.*) Calculating the calculated value of the positioning and/or orientation of the visual identifier using the acquired image; using the known algorithm for the coordinates calculations; obtaining the calculated virtual 3D coordinates for four corners of the selected marker: (Xcalc, Ycalc, Zcalc); comparing the pre-determined real coordinates and the calculated virtual ones, obtained using algorithm (Xreal, Yreal, Zreal) vs (Xcalc, Ycalc, Zcalc); determining the error of the algorithm (deltaX, deltaY, deltaZ) i.e. the difference between the real and calculated values, see the "the algorithm error" as shown in Figure 5. The coordinate system and measurement units depend on the implementation. The final algorithm error is calculated as a fraction of a pixel on the camera sensor; repeating the steps of finding, calculating, comparing and determining for each marker located within the one or more images acquired by the camera; using the error values obtained for each marker determining the error distribution for the selected camera. In some implementations this might be an array of numbers, in some cases, the closest known mathematics and probability distribution laws could be used; using the results of the proposed algorithm, i.e. the error distribution, to estimate the worst case mismatch of the predicted position of the marker and its real position. The mismatch depends on the position of the camera (see Figure 6) relative to the marker; based on the error estimations determining the worst and/or best positions of the camera relative to one or more of the markers; and using these estimations to generate recommendations for better camera and marker positioning within the robot cell environment.

The error estimations obtained using the above methods are dependent upon the position of the camera relative to one or more of the markers. For example referring to Figure 6 there is shown the positional error estimation based upon the orientation of the visual identifiers 403, 405 (in this instance comprising markers) relative to the camera 401. The first marker 403 is orientated substantially perpendicular relative to the imaging plane of the camera 401 whilst the second marker 405 is substantially obliquely disposed relative to the imaging plane of the camera 401. The determined positional error is greater for the second marker 405 compared to the first marker due to the oblique orientation of the second marker relative to the camera. Accordingly where a plurality of markers are provided in the robot cell environment 100, the determined positional error will be highly dependent upon the position of the markers relative to the camera or the camera relative to the markers.

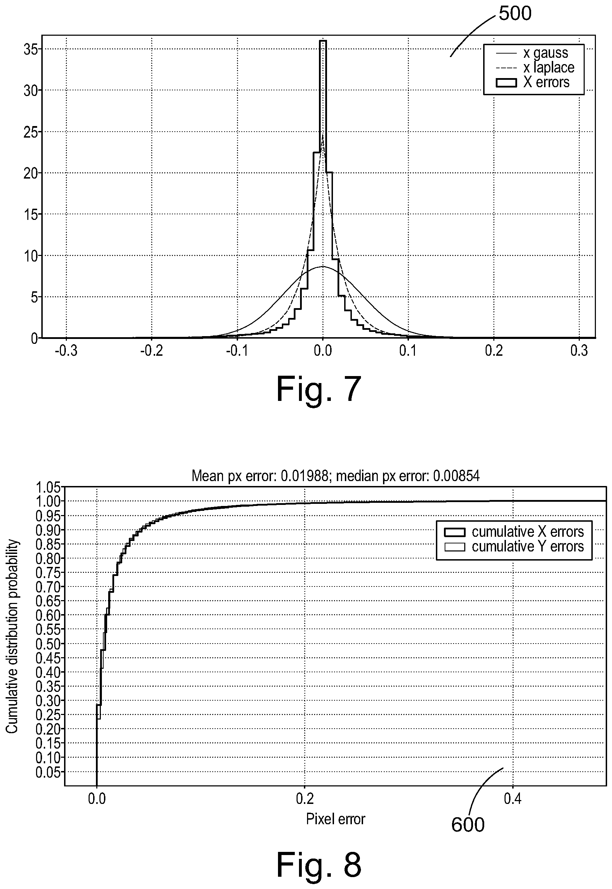

Referring now to Figure 7 there is shown the distribution of the error in finding the position of the corner in the image 500 along the X axis (staired graph) and its approximation by the normal distribution (lower hill graph) and the Laplace (triangular line) distribution (measured for known markers at different distances from the camera). Depending on the implementation, various probability distribution laws might be used for approximation of the error distribution. The particular one might be selected depending on the precision requirements of the end-user system. The error is given in fractions of a single pixel of the camera sensor.

The estimations of the error probability 500, shown in Figure 7, allow for the estimation of the likelihood of mispositioning of the object by the robots within the robot cell environment, depending on the camera sensor resolution (pixel size). Figure 8 shows the integral error distribution of the calculated virtual corner position along the X and Y axes 600. Typically 98% of errors belong to the interval (-0.2; 0.2) pixels.

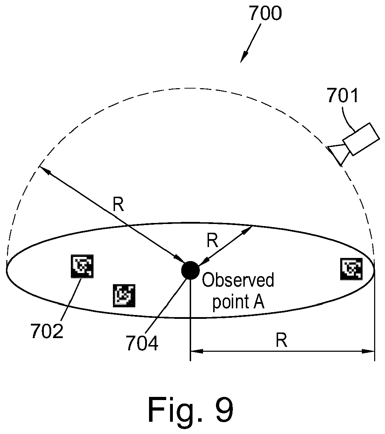

Figure 9 illustrates the potential implementation of the method of the present invention 700 with the camera 701 being positionable at a plurality of different locations. For example taking the virtual *point A* 704 within the observed scene of the camera 701. Point A 704 for example may comprise the geometrical centre of all observed visual identifiers 702, typically comprising markers, from the camera 701. The illustrated hemisphere corresponds to the plurality of positions in space which the at least one camera could be located in relative to the point A 704. If the camera 701 was placed at any position inside this sphere at a position based upon the maximum potential error value of the calculated value of at least one of the markers, the positional error of the object positioning determination will not exceed the estimated maximum potential error value. We also may estimate the maximal error probability for each point within this semi sphere (see Figure 9) using the method for determining positional errors within a robotic cell environment.

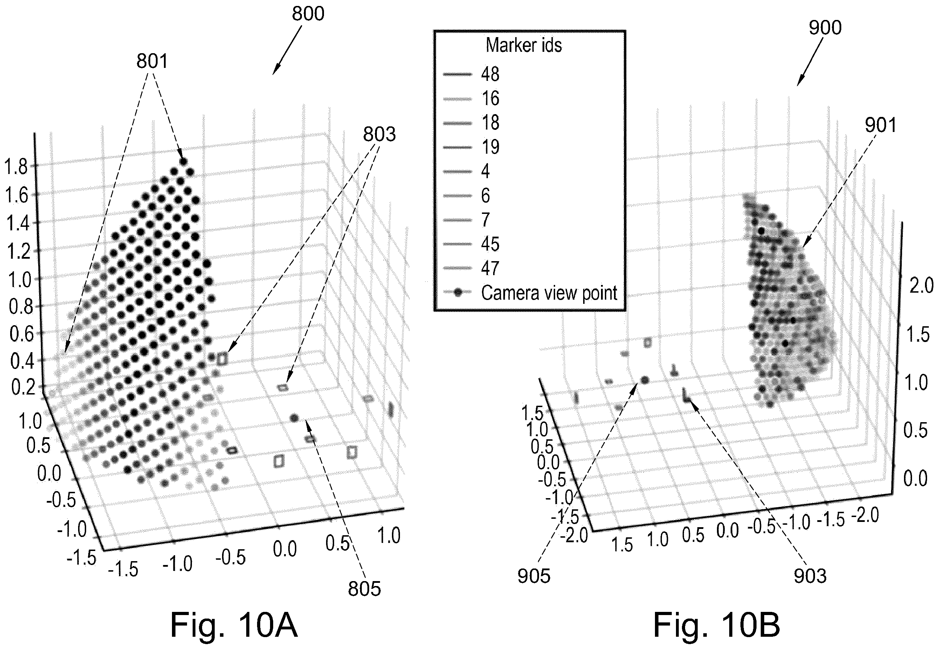

Figure 10A illustrates the distribution of the positional error based on the camera adopting a plurality of positions within a virtual representation of the robot cell environment 800. Figure 10A shows a plurality of coloured spots 801 each comprising a position of the camera within the robot cell environment, for example at each of these positions 801 the camera is typically located 3 meters away from the observed point A 805. The camera is positioned such that the field of view of the camera has in its view the black dot, designating the point A 805. In other words the axis perpendicular to the surface of the camera sensors intersects the geometric centre of the camera sensor and point A 805. To be precise, typically in fact, the optical axis of the lens system does not go exactly through the geometric centre of the camera sensor, due to inaccurate positioning of the sensor within the camera body. This effect is ideally taken into account during a calibration process. It should be understood that point A is merely representative and is not limited to the position shown, in alternative embodiments point A could be any point in free space located within the field of view of the at least one camera. The squares 803 designate the visual identifiers comprising markers on the scene, which can be observed by the camera.

The darker spots for the camera positions 801 designate positions of the camera, with minimal positional error for the objects coordinates determination for all of the viewed markers 803.

Figure 10B shows how accurately each marker is seen from one position of the camera 900. By repeating the method for determining positional errors within a robotic cell environment 901 when the camera is located at a plurality of positions relative to the robotic cell environment 901, it can be determined where the worst error for this position of the marker 903 and/or the camera is. For example Figure 10B was generated using the distribution from Figure 7 for each marker 903 to determinate the worst error for this position of the marker 903 and the camera. The shown markers 903 could be markers designating particular objects on the scene for the purpose of their surveillance such as in the robotic cell environment 901, wherein the markers 903 designate robots or parts of the robot located therein. The same markers 903, or the other ones, might serve as a set of "world markers", by which the coordinate system is selected within the robotic cell environment 901. It is important to accurately determine the position of the camera in the world coordinate system. The more markers 903 which are considered as world markers, the better the accuracy of the method and system.

The claimed method for the object positioning error estimation allows for the determination of the maximal distance from the observed point to the camera to assure maximal error. Advantageously the method allows for optimal configuration planning of at least a robot cell, preferably an automated manufacturing line from the computer vision standpoint. The claimed invention improves the overall quality of the computer vision system utilised in such manufacturing lines. Further advantageously, the output of the proposed approach, i.e. the maximum potential error value for the calculated value of at least one of the visual identifiers of the plurality of visual identifiers based on at least the error values obtained for the plurality of visual identifiers can be used for real-time updates of the cameras intrinsic and extrinsic parameters (depending on the camera model).

It will be understood that while exemplary features of a method for determining positional errors within a robotic cell environment have been described, that such an arrangement is not to be construed as limiting the invention to such features. The method for determining positional errors within a robotic cell environment may be implemented in software, firmware, hardware, or a combination thereof. In one mode, the method is implemented in software, as an executable program, and is executed by one or more special or general purpose digital computer(s), such as a personal computer (PC; IBM-compatible, Apple-compatible, or otherwise), personal digital assistant, workstation, minicomputer, or mainframe computer. The steps of the method may be implemented by a server or computer in which the software modules reside or partially reside.

Generally, in terms of hardware architecture, such a computer will include, as will be well understood by the person skilled in the art, a processor, memory, and one or more input and/or output (I/O) devices (or peripherals) that are communicatively coupled via a local interface. The local interface can be, for example, but is not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the other computer components.

The processor(s), i.e. of the controller, may be programmed to perform the functions of the method for determining positional errors within a robotic cell environment. The processor(s) is a hardware device for executing software, particularly software stored in memory. Processor(s) can be any custom made or commercially available processor, a primary processing unit (CPU), an auxiliary processor among several processors associated with a computer, a semiconductor based microprocessor (in the form of a microchip or chip set), a macro-processor, or generally any device for executing software instructions.

Memory is associated with processor(s) and can include any one or a combination of volatile memory elements (e.g., random access memory (RAM, such as DRAM, SRAM, SDRAM, etc.)) and non-volatile memory elements (e.g., ROM, hard drive, tape, CDROM, etc.). Moreover, memory may incorporate electronic, magnetic, optical, and/or other types of storage media. Memory can have a distributed architecture where various components are situated remote from one another, but are still accessed by processor(s).

The software in memory may include one or more separate programs. The separate programs comprise ordered listings of executable instructions for implementing logical functions in order to implement the functions of the modules. In the example of heretofore described, the software in memory includes the one or more components of the method and is executable on a suitable operating system (O/S).

The present disclosure may include components provided as a source program, executable program (object code), script, or any other entity comprising a set of instructions to be performed. When a source program, the program needs to be translated via a compiler, assembler, interpreter, or the like, which may or may not be included within the memory, so as to operate properly in connection with the O/S. Furthermore, a methodology implemented according to the teaching may be expressed as (a) an object oriented programming language, which has classes of data and methods, or (b) a procedural programming language, which has routines, subroutines, and/or functions, for example but not limited to, C, C++, Pascal, Basic, Fortran, Cobol, Perl, Java, and Ada.

When the method is implemented in software, it should be noted that such software can be stored on any computer readable medium for use by or in connection with any computer related system or method. In the context of this teaching, a computer readable medium is an electronic, magnetic, optical, or other physical device or means that can contain or store a computer program for use by or in connection with a computer related system or method. Such an arrangement can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this disclosure, a "computer-readable medium" can be any means that can store, communicate, propagate, or transport the program for use by or in connection with the instruction execution system, apparatus, or device. The computer readable medium can be for example, but not limited to, an electronic, magnetic, optical, electromagnetic, infrared, or semiconductor system, apparatus, device, or propagation medium. Any process descriptions or blocks in the Figures, should be understood as representing modules, segments, or portions of code which include one or more executable instructions for implementing specific logical functions or steps in the process, as would be understood by those having ordinary skill in the art.

The above detailed description of embodiments of the disclosure is not intended to be exhaustive nor to limit the disclosure to the exact form disclosed. While specific examples for the disclosure are described above for illustrative purposes, those skilled in the relevant art will recognize various modifications are possible within the scope of the disclosure. For example, while processes and blocks have been demonstrated in a particular order, different implementations may perform routines or employ systems having blocks, in an alternate order, and some processes or blocks may be deleted, supplemented, added, moved, separated, combined, and/or modified to provide different combinations or subcombinations. Each of these processes or blocks may be implemented in a variety of alternate ways. Also, while processes or blocks are at times shown as being performed in sequence, these processes or blocks may instead be performed or implemented in parallel or may be performed at different times. The results of processes or blocks may be also held in a non-persistent store as a method of increasing throughput and reducing processing requirements.

The invention is not limited to the embodiment(s) described herein but can be amended or modified without departing from the scope of the present invention.

## Claims

1. A method for determining positional errors within a robotic cell environment, the method comprising the steps of:

   a). Obtaining one or more pre-determined real values of the positioning and/or orientation of a visual identifier located within the robotic cell environment;
   b). Acquiring an image of the robotic cell environment using a camera located at a first position and/or orientation within the robotic cell environment;
   c). Calculating one or more values of the positioning and/or orientation of the visual identifier using the acquired image;
   d). Comparing the real value of the positioning and/or orientation of the visual identifier within the robotic cell environment with the calculated value of the positioning and/or orientation of the visual identifier within the robotic cell environment;
   e). Determining an error value comprising the difference between the real and calculated values;
   f). Repeating steps a) to e) for a plurality of other visual identifiers located within the robotic cell environment; and
   g). Estimating a maximum potential error value for the calculated value of at least one of the visual identifiers of the plurality of visual identifiers based on at least the error values determined for the plurality of visual identifiers.

2. The method as claimed in claim 1, further comprising determining an error distribution for the camera when located at the first position and/or orientation based on the error values determined for the plurality of visual identifiers and using the error distribution to estimate the maximum potential error value for one or more of the visual identifiers.

3. The method as claimed in claim 1 or 2, further comprising repeating steps a). to g.) when the camera is located at least at a second position and/or orientation within the robotic cell environment.

4. The method of any preceding claim, wherein the distance from the camera to one or more of the visual identifiers when the camera is at the first position is greater than or less than the distance from the camera to the one or more of the visual identifiers when the camera is at the second position.

5. The method as claimed in any preceding claim, wherein the visual identifiers correspond to one or more parts of a robot located within the robotic cell environment.

6. The method of claim 5, wherein the visual identifiers comprise one or more markers.

7. The method of claim 6, wherein the markers comprise ArUco markers.

8. The method of any of claims 5 to 7, wherein the visual identifiers comprise the shape of the one or more parts of the robot.

9. The method of any preceding claim, wherein the real and/or calculated values of the positioning and/or orientation of the visual identifiers comprise co-ordinate data along an x, y and z axis.

10. The method of claim 2, wherein the error distribution comprises a normal distribution of the error values or any other suitable distribution.

11. The method of any preceding claim, further comprising generating data indicating the best and/or worst positions for the camera based on at least the estimated maximum potential error value for the calculated value of at least one of the visual identifiers of the plurality of visual identifiers.

12. A robot cell system comprising,

   One or more robots in a physical robotic cell;
   A displacement arrangement for carrying one or more objects relative to the robots;
   A plurality of visual identifiers;
   At least one camera;
   A controller communicatively coupled to at least the one or more robots and the at least one camera;
   Wherein the controller is configured to transmit instructions to the one or more robots which cause the robots to interact with the objects carried on the displacement arrangement in accordance with one or more pre-defined actions;
   Wherein the controller is configured to carry out the method for determining positional errors within a robotic cell environment as claimed in any preceding claim and the robotic cell environment is the physical robotic cell.

13. The robot cell system of claim 12, wherein the controller is configured to adjust the position and/or orientation of the camera in real-time based on the estimated maximum potential error value for the calculated value of at least one of the visual identifiers of the plurality of visual identifiers.

14. The robot cell system of claim 12 or 13, wherein the pre-defined actions correspond to the movement and/or orientation of the robots relative to the one or more objects and wherein said pre-defined actions are pre-installed on the controller.

15. The robot cell system of any of claims 12-14, further comprising a plurality of cameras.

Fig. 1

Fig. 2

Zb   Base Coordinate System

Robot Axis Coordinate Values
(Xb,Yb,Zb,RXb,RYb,RZb)

107

0b                                               Yb

Station Axis Pulse Values (W1,W2)

Xb

Base Axis Coordinate Values

## Fig. 3

200

Y

201

camera sensor

Ypix

Xpix

X

## Fig. 4

Fig. 5

Fig. 6

Fig. 7

Fig. 8

700

701

R

R

702

704

Observed
point A

R

Fig. 9

Fig. 10A

Fig. 10B

Europäisches
Patentamt

European
Patent Office

Office européen
des brevets

# EUROPEAN SEARCH REPORT

Application Number

EP 20 16 2255

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/059417 A1 (SHIRAKYAN GRIGOR [US] ET AL) 3 March 2016 (2016-03-03) <br> * paragraph [0009] * <br> * paragraph [0029] - paragraph [0031] * <br> * paragraph [0037] - paragraph [0040] * <br> * paragraph [0043] - paragraph [0045] * <br> * paragraph [0050] - paragraph [0053] * <br> * figures 1, 2, 3 * <br> ----- | 1-15 | INV. <br> B25J9/16 |
| A | US 2019/047152 A1 (TONOGAI NORIKAZU [JP]) 14 February 2019 (2019-02-14) <br> * the whole document * <br> ----- | 1-15 | |
| A | US 2011/280472 A1 (WALLACK AARON S [US] ET AL) 17 November 2011 (2011-11-17) <br> * the whole document * <br> ----- | 1-15 | |
| A | DE 10 2016 212695 A1 (SIEMENS AG [DE]) 30 November 2017 (2017-11-30) <br> * the whole document * <br> ----- | 1-15 | |
| A | US 2008/188983 A1 (BAN KAZUNORI [JP] ET AL) 7 August 2008 (2008-08-07) <br> * the whole document * <br> ----- | 1-15 | TECHNICAL FIELDS SEARCHED (IPC) <br><br> B25J <br> G05B <br> G06T |

The present search report has been drawn up for all claims

| Place of search | Date of completion of the search | Examiner |
|---|---|---|
| The Hague | 14 July 2020 | Falconi, Riccardo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 16 2255

This annex lists the patent family members relating to the patent documents cited in the above-mentioned European search report.
The members are as contained in the European Patent Office EDP file on
The European Patent Office is in no way liable for these particulars which are merely given for the purpose of information.

14-07-2020

| Patent document cited in search report | | Publication date | Patent family member(s) | | Publication date |
|---|---|---|---|---|---|
| US 2016059417 | A1 | 03-03-2016 | CN 106461383 A | | 22-02-2017 |
| | | | EP 3160690 A1 | | 03-05-2017 |
| | | | US 9211643 B1 | | 15-12-2015 |
| | | | US 2016059417 A1 | | 03-03-2016 |
| | | | WO 2015200152 A1 | | 30-12-2015 |
| US 2019047152 | A1 | 14-02-2019 | CN 109382821 A | | 26-02-2019 |
| | | | EP 3446838 A1 | | 27-02-2019 |
| | | | JP 2019030943 A | | 28-02-2019 |
| | | | US 2019047152 A1 | | 14-02-2019 |
| US 2011280472 | A1 | 17-11-2011 | CN 103209809 A | | 17-07-2013 |
| | | | DE 112011101730 T5 | | 27-06-2013 |
| | | | JP 5904676 B2 | | 20-04-2016 |
| | | | JP 2013526423 A | | 24-06-2013 |
| | | | US 2011280472 A1 | | 17-11-2011 |
| | | | US 2016039096 A1 | | 11-02-2016 |
| | | | US 2019084160 A1 | | 21-03-2019 |
| | | | WO 2011143576 A2 | | 17-11-2011 |
| DE 102016212695 | A1 | 30-11-2017 | CN 109153125 A | | 04-01-2019 |
| | | | DE 102016212694 A1 | | 30-11-2017 |
| | | | DE 102016212695 A1 | | 30-11-2017 |
| | | | EP 3463766 A1 | | 10-04-2019 |
| | | | WO 2017207312 A1 | | 07-12-2017 |
| | | | WO 2017207436 A1 | | 07-12-2017 |
| US 2008188983 | A1 | 07-08-2008 | CN 101239469 A | | 13-08-2008 |
| | | | EP 1953496 A2 | | 06-08-2008 |
| | | | JP 4298757 B2 | | 22-07-2009 |
| | | | JP 2008188705 A | | 21-08-2008 |
| | | | US 2008188983 A1 | | 07-08-2008 |

EPO FORM P0459

For more details about this annex : see Official Journal of the European Patent Office, No. 12/82